# EUROPEAN PATENT APPLICATION

(11) **EP 4 668 126 A1**
(43) Date of publication of application: **24.12.2025**
(21) Application number: 25183396.8
(22) Date of filing: 17.06.2025
(51) Int. Cl.: G06F 16/215, G06F 16/25

(54) **AUTOMATED MULTI-TIER DATA CERTIFICATION FOR INTERNAL DATA ANALYSIS**

(30) Priority: 18.06.2024 US 202418747009
(71) Applicant: UiPath, Inc., New York NY 10017 (US)
(72) Inventor: HOLCOMBE, Jordan, New York, 10017 (US); HAVENS, Kendra, New York, 10017 (US); RAPAKA, Venkata Syam P., New York, 10017 (US)
(74) Representative: Ungria López, Javier

(57) **Abstract**

Systems and methods of certifying data are provided. 1) data that was transformed from initial data and 2) data specifications for the transformed data are received. A similarity between the transformed data and the data specifications is determined. It is determined whether the similarity is satisfactory. The transformed data is certified in response to determining that the similarity is satisfactory.

## Description

### FIELD

The present invention generally relates to automated multi-tier data certification, and more specifically, to automated multi-tier data certification for internal data analysis.

### BACKGROUND

Internal data analysis involves examining and interpreting data generated within an organization to inform decision making, improve processes, and achieve strategic goals. Internal data analysis is typically performed by collecting data from databases, applications, and other data sources of the organization for data cleaning and preparation, data transformation and integration, and data analysis. However, performance of internal data analysis is conventionally hectic and difficult to implement. Thus, data transformed according to conventional internal data analysis is of inconsistent quality and insufficient security. Accordingly, an improved and/or alternative approach may be beneficial.

### SUMMARY

Certain embodiments of the present invention may provide alternatives or solutions to the problems and needs in the art that have not yet been fully identified, appreciated, or solved by current data analysis technologies. For example, some embodiments of the present invention pertain to automated multi-tier data certification for internal data analysis.

In accordance with one or more embodiments, systems and methods of certifying data are provided. 1) data that was transformed from initial data and 2) data specifications for the transformed data are received. A similarity between the transformed data and the data specifications is determined. It is determined whether the similarity is satisfactory. The transformed data is certified in response to determining that the similarity is satisfactory.

In one embodiment, the transformed data comprises telemetry data. The telemetry data comprises names, triggers, and properties of telemetry events.

In one embodiment, it is verified that values of the transformed data are constrained to a reference range based on a source of truth data source.

In one embodiment, a semantic similarity between the transformed data and the data specifications is determined.

In one embodiment, the data specifications are defined based on values of the transformed data.

In one embodiment, the certified data is merged with other certified data to generate a certified dataset.

In one embodiment, metrics are determined based on the certified dataset.

### BRIEF DESCRIPTION OF THE DRAWINGS

In order that the advantages of certain embodiments of the invention will be readily understood, a more particular description of the invention briefly described above will be rendered by reference to specific embodiments that are illustrated in the appended drawings. While it should be understood that these drawings depict only typical embodiments of the invention and are not therefore to be considered to be limiting of its scope, the invention will be described and explained with additional specificity and detail through the use of the accompanying drawings, in which:
FIG. 1 is an architectural diagram illustrating a computing system configured to implement one or more embodiments of the present invention.
FIG. 2 shows a method for certifying data for internal data analysis of an organization, in accordance with one or more embodiments.
FIG. 3 shows an exemplary table of telemetry events, in accordance with one or more embodiments.
FIG. 4 shows an exemplary certified dataset, in accordance with one or more embodiments.
FIG. 5 shows a user interface of a user selecting subsidiaries for joining, in accordance with one or more embodiments.
FIG. 6 shows a user interface of a subsidiary and license history, in accordance with one or more embodiments.
FIG. 7 shows a user interface with example queries defined by a user, in accordance with one or more embodiments.
FIG. 8 shows an exemplary user interface defining metrics, in accordance with one or more embodiments.

Unless otherwise indicated, similar reference characters denote corresponding features consistently throughout the attached drawings.

### DETAILED DESCRIPTION OF THE EMBODIMENTS

Some embodiments pertain to automated multi-tier data certification for internal data analysis.

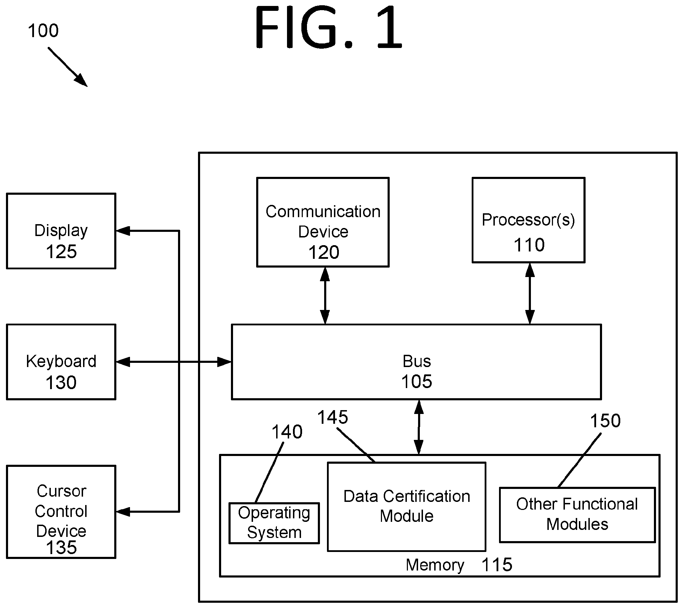

FIG. 1 is an architectural diagram illustrating a computing system 100 configured to implement embodiment of the present invention. In some embodiments, computing system 100 may be one or more of the computing systems depicted and/or described herein. Computing system 100 includes a bus 105 or other communication mechanism for communicating information, and processor(s) 110 coupled to bus 105 for processing information. Processor(s) 110 may be any type of general or specific purpose processor, including a Central Processing Unit (CPU), an Application Specific Integrated Circuit (ASIC), a Field Programmable Gate Array (FPGA), a Graphics Processing Unit (GPU), multiple instances thereof, and/or any combination thereof. Processor(s) 110 may also have multiple processing cores, and at least some of the cores may be configured to perform specific functions. Multi-parallel processing may be used in some embodiments. In certain embodiments, at least one of processor(s) 110 may be a neuromorphic circuit that includes processing elements that mimic biological neurons. In some embodiments, neuromorphic circuits may not require the typical components of a Von Neumann computing architecture.

Computing system 100 further includes a memory 115 for storing information and instructions to be executed by processor(s) 110. Memory 115 can be comprised of any combination of random access memory (RAM), read-only memory (ROM), flash memory, cache, static storage such as a magnetic or optical disk, or any other types of non-transitory computer-readable media or combinations thereof. Non-transitory computer-readable media may be any available media that can be accessed by processor(s) 110 and may include volatile media, non-volatile media, or both. The media may also be removable, non-removable, or both. Computing system 100 includes a communication device 120, such as a transceiver, to provide access to a communications network via a wireless and/or wired connection. In some embodiments, communication device 120 may include one or more antennas that are singular, arrayed, phased, switched, beamforming, beamsteering, a combination thereof, and or any other antenna configuration without deviating from the scope of the invention.

Processor(s) 110 are further coupled via bus 105 to a display 125. Any suitable display device and haptic I/O may be used without deviating from the scope of the invention.

A keyboard 130 and a cursor control device 135, such as a computer mouse, a touchpad, etc., are further coupled to bus 105 to enable a user to interface with computing system 100. However, in certain embodiments, a physical keyboard and mouse may not be present, and the user may interact with the device solely through display 125 and/or a touchpad (not shown). Any type and combination of input devices may be used as a matter of design choice. In certain embodiments, no physical input device and/or display is present. For instance, the user may interact with computing system 100 remotely via another computing system in communication therewith, or computing system 100 may operate autonomously.

Memory 115 stores software modules that provide functionality when executed by processor(s) 110. The modules include an operating system 140 for computing system 100. The modules further include a data certification module 145 that is configured to perform all or part of the processes described herein or derivatives thereof. Computing system 100 may include one or more additional functional modules 150 that include additional functionality.

One skilled in the art will appreciate that a "computing system" could be embodied as a server, an embedded computing system, a personal computer, a console, a personal digital assistant (PDA), a cell phone, a tablet computing device, a quantum computing system, or any other suitable computing device, or combination of devices without deviating from the scope of the invention. Presenting the above-described functions as being performed by a "system" is not intended to limit the scope of the present invention in any way, but is intended to provide one example of the many embodiments of the present invention. Indeed, methods, systems, and apparatuses disclosed herein may be implemented in localized and distributed forms consistent with computing technology, including cloud computing systems. The computing system could be part of or otherwise accessible by a local area network (LAN), a mobile communications network, a satellite communications network, the Internet, a public or private cloud, a hybrid cloud, a server farm, any combination thereof, etc. Any localized or distributed architecture may be used without deviating from the scope of the invention.

It should be noted that some of the system features described in this specification have been presented as modules, in order to more particularly emphasize their implementation independence. For example, a module may be implemented as a hardware circuit comprising custom very large scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices, graphics processing units, or the like.

A module may also be at least partially implemented in software for execution by various types of processors. An identified unit of executable code may, for instance, include one or more physical or logical blocks of computer instructions that may, for instance, be organized as an object, procedure, or function. Nevertheless, the executables of an identified module need not be physically located together, but may include disparate instructions stored in different locations that, when joined logically together, comprise the module and achieve the stated purpose for the module. Further, modules may be stored on a computer-readable medium, which may be, for instance, a hard disk drive, flash device, RAM, tape, and/or any other such non-transitory computer-readable medium used to store data without deviating from the scope of the invention.

Indeed, a module of executable code could be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network.

Embodiments described herein provide for automated multi-tier data certification for internal data analysis. Such certified data comprises certified telemetry, certified datasets, and certified metrics. The certification of data has two primary components: 1) a specification component that allows a user to define data specifications for desired data, and 2) a matching component that determines whether transformed data matches the data specifications. Advantageously, data certified in accordance with embodiments provides for improvements in computer technology by enabling the automatic certification of large amounts of data for accurate internal data analysis.

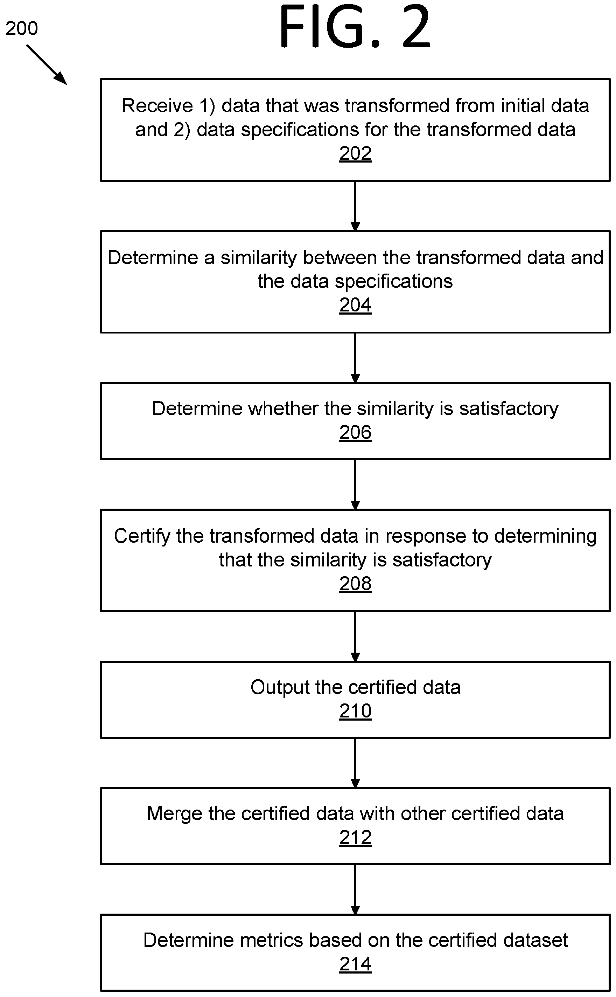

FIG. 2 shows a method 200 for certifying data for internal data analysis of an organization, in accordance with one or more embodiments. The steps and/or sub-steps of method 200 may be perform by any suitable computing system or systems, such as, e.g., computing system 100 of FIG. 1.

At step 202 of FIG. 2, 1) data that was transformed from initial data and 2) data specifications for the transformed data are received.

The initial data may comprise data and/or metadata from one or more internal data sources of the organization. For example, the initial data may comprise records, reports, metrics, logs, etc. of applications or products of the organization. However, the initial data may comprise any other suitable type of data. The internal data sources may comprise databases or systems of the organization, such as, e.g., an SQL (structured query language) database.

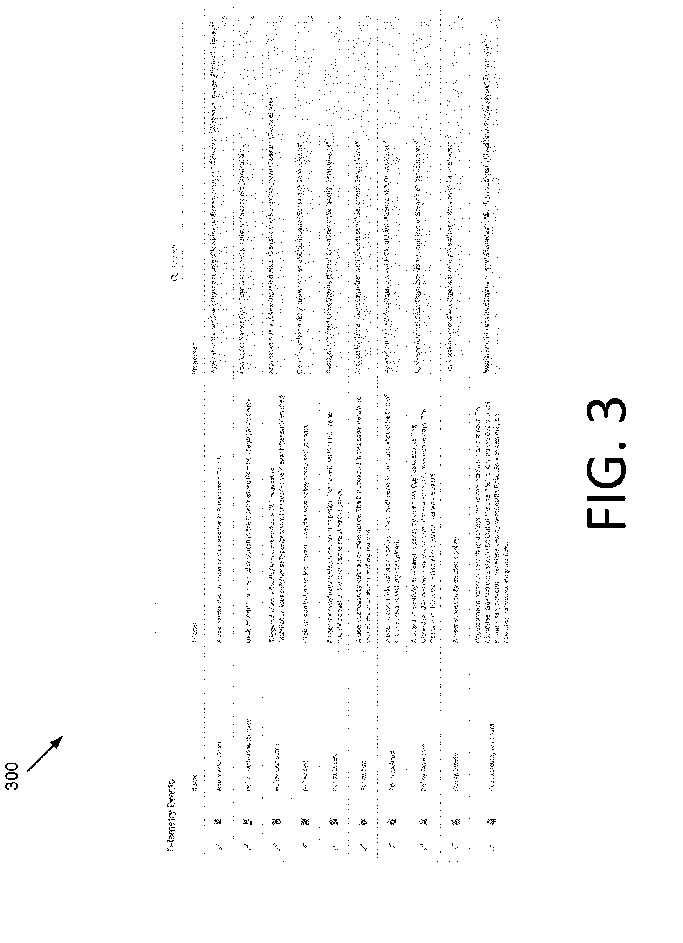

In one embodiment, the initial data comprises telemetry data. As used herein, telemetry data is data collected from one or more remote data sources of the organization. In one embodiment, the telemetry data comprises names, triggers, and properties of telemetry events, as shown in table 300 of FIG. 3. However, the telemetry data may include any other suitable telemetry data, such as, e.g., performance metrics, health data, usage data, environmental data, etc.

FIG. 3 shows an exemplary table 300 of telemetry events, in accordance with one or more embodiments. Table 300 defines the name, the trigger, and properties for each telemetry event. The telemetry data may comprise the name, trigger, and properties of the telemetry events in table 300.

Referring back to step 202 of FIG. 2, the initial data may be transformed into the transformed data by applying one or more suitable transformations. The one or more transformations may be performed to prepare the initial data for internal data analysis to ensure that the initial data is clean, consistent, and suitable for analysis.

In one embodiment, the one or more transformations may comprise transformation of the initial data from semi-structured data to strongly typed data. Semi-structured data is data that does not conform to a rigid structure but may comprise tags or markers to separate data elements and enforce hierarchies of records and fields. Strongly typed data is data that adheres to a struct schema defined by a formal data model, where every data element is associated with a specific type.

In one embodiment, the one or more transformations may comprise one or more of the following exemplary operations: 1) data cleaning operations (e.g., removing duplicate data, correcting typos and inaccuracies, addressing missing values (e.g., by imputation or removal)) for identifying and correcting errors in the initial data, 2) data normalization operations (e.g., scaling or standardization) for adjusting values measured on different scales to a common scale, 3) data aggregation operations (e.g., summing values, averaging values, grouping data) for summarizing data, 4) data integration operations (e.g., merging datasets) for combining data from different data sources, 5) data filtering operations (e.g., removing outliers or irrelevant data, filtering data to include only relevant data) for selecting a subset of data, 6) data transformation operations (e.g., pivoting or unpivoting data, converting categorical data into numerical format, parsing and extracting information from text) for converting data into different formats or structures, 7) data reduction operations (e.g., dimensionality reduction (e.g., principal component analysis)) for reducing the volume of data, and 8) data encoding (e.g., label encoding, one-hot encoding) for transforming categorical data into a numerical format suitable for analysis or for machine learning models. However, the one or more transformation may comprise any other suitable type of operation.

In one embodiment, instead of receiving the transformed data, the initial data may be received at step 202 of FIG. 2 and initial data may be transformed into the transformed data.

The data specifications define characteristics, formats, and requirements for the transformed data to, for example, ensure consistency, accuracy, and suitability for the internal data analysis. In one embodiment, the data specifications may define one or more of the following exemplary requirements: 1) data types (e.g., integer, float, string, date, etc.) or formats (e.g., date format, number format, string length), 2) data fields defining field names, field descriptions, and field types (the data type assigned to each field), 3) data constraints defining validation rules (conditions that the data must meet to be considered valid, such as, e.g., range limits or mandatory fields), uniqueness (whether values in a field must be unique), and referential integrity (constraints to ensure relationships between data in different tables or datasets are valid), 4) metadata defining definitions of each data element, units of measure (e.g., meters, kilograms), and source information, 5) data relationships defining hierarchies (how data elements are structured and related (e.g., a parent-child relationship) and associations (links between different data entities, such as, e.g., foreign key relationships in databases), and 6) data processing rules defining transformation rules (how the transformed data are to be transformed from the initial data) and aggregation rules (how to summarize or aggregate the transformed data). However, the data specifications may define any other suitable type of requirement of the transformed data. The data specifications may be defined by a user interacting with a computing system (e.g., computing system 100 of FIG. 1).

The transformed data and the data specifications data may be received, for example, by loading the transformed data and the data specifications from a storage or memory of a computer system (e.g., memory 115 of computing system 100 of FIG. 1) or by receiving the transformed data and the data specifications from a remote computer system (e.g., computing system 100 of FIG. 1).

At step 204 of FIG. 2, a similarity between the transformed data and the data specifications is determined. The similarity may be represented as a similarity score or in any other suitable format.

In one embodiment, the similarity is a semantic similarity measure of the degree to which the transformed data and the data specifications are related in terms of their meaning or context. For example, the semantic similarity measure may be a semantic distance of telemetry events and properties or a semantic distance of expected telemetry event sequences. The semantic similarity measure is performed by comparing the actual values of the transformed data with expected values defined by the data specifications. The semantic similarity measure may be based on any suitable semantic similarity measure, such as, e.g., Jaccard similarity, cosine similarity, word embeddings, Levenshtein distance, etc. However, the similarity may be determined according to any other suitable approach.

In one embodiment, transformed data that does not match the data specifications is identified. Examples of such identified transformed data include undocumented events in the transformed data that do not match event names in the data specifications or properties of the events in the transformed data that do not match the data specifications. The similarity decreases where such transformed data that does not match the data specifications is identified.

In one embodiment, values or types of values of the transformed data are verified to be constrained to a reference value or range. For example, for certain data of the transformed data, verification that values of the certain data are constrained to a reference value or range is performed using another data source (i.e., a source of truth data source). Such verification may be performed by, for example, calculating a statistical difference score of the distributions of values. In one embodiment, the constrained certain data comprises properties used to join data, reintroducing the foreign key concept to cross product data within a natively unconstrained warehouse. For example, given a pool of cloud organization IDs (identifiers) defined for a cloud platform source of truth that any telemetry property designated with a cloud organization ID is compared against, if the data specifications define a telemetry event requires a certain kind of field that does not match the source of truth, that telemetry event is considered uncertified and unusable.

In one embodiment, the data specifications may be defined based on a value of the transformed data. For example, given an event for "Robot" and its activation type is "Cloud," the required properties and values defined in the data specifications for the event can be different than if the activation type was "AutomationSuite."

At step 206 of FIG. 2, it is determined whether the similarity is satisfactory and, at step 208 of FIG. 2, the transformed data is certified in response to determining that the similarity is satisfactory. In one embodiment, the similarity (e.g., similarity score) is compared with a threshold and if the similarity satisfies (e.g., is greater than) the threshold, the similarity is determined to be satisfactory and the transformed data is certified.

At step 210 of FIG. 2, the certified data is output. For example, the certified data can be output by displaying the certified data on a display device of a computer system (e.g., display 125 of computing system 100 of FIG. 1), storing the certified data on a memory or storage of a computer system (e.g., memory 115 of computing system 100 of FIG. 1), or by transmitting the certified data to a remote computer system (e.g., computing system 100 of FIG. 1).

In one embodiment, the certified data is used for decision making for consumption prices of robots (e.g., RPA (robotic process automation) robots). In another embodiment, the certified data is used for building recommendations based on what products or features users are using. In a further embodiment, the certified data is used for A/B testing. A/B testing is a method of comparing two versions of documents or other data to determine which one performs better in achieving a specific goal. In a further embodiment, the certified data is used for application usage with strong semantic guarantees. For example, an integration service may use the certified data for licensing enforcement as the integration service is a distributed system and the certified data collects the data together, performs the accounting on how much the user has been used, and sets a rate limit according to how much users purchase.

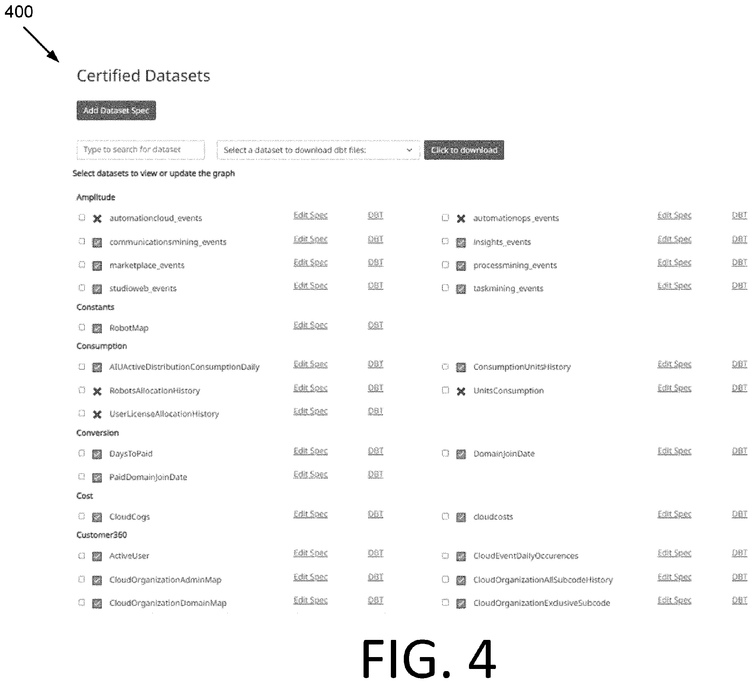

At step 212 of FIG. 2, the certified data is merged with other certified data to generate a certified dataset. The certified data represents a single stream of (e.g., telemetry) data from data sources of the organization while the certified dataset represents multiple streams of data from various data sources that are merged. Accordingly, the certified data provides for automated matching of the data specifications with implementation. Further, the certified data provides for entity integrity and referential integrity implemented on unconstrained data warehouse. An example of a certified dataset is certified dataset 400 of FIG. 4.

FIG. 4 shows an exemplary certified dataset 400, in accordance with one or more embodiments. Certified dataset 400 is merged from various selected data sources selected by a user.

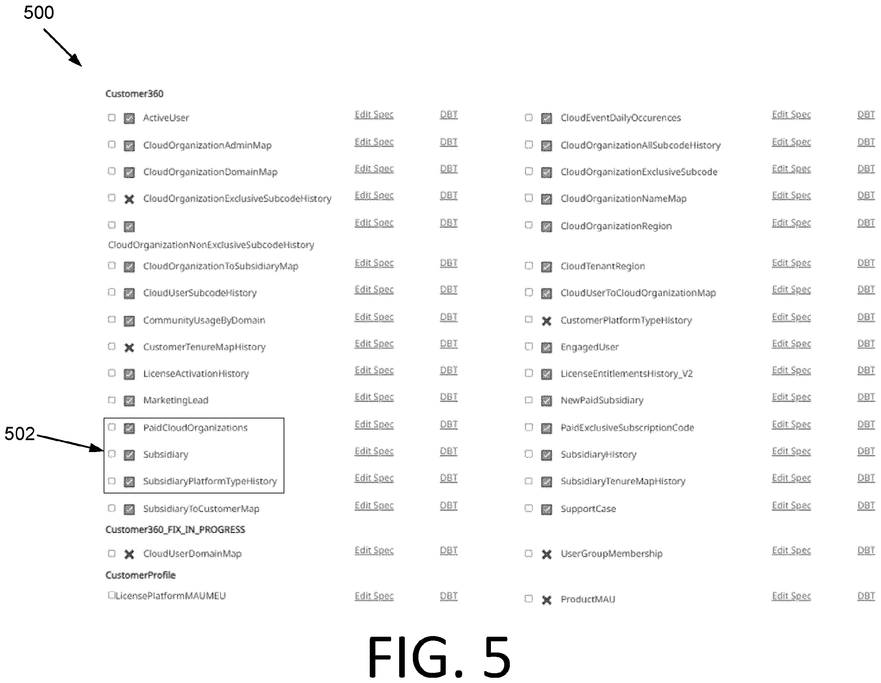

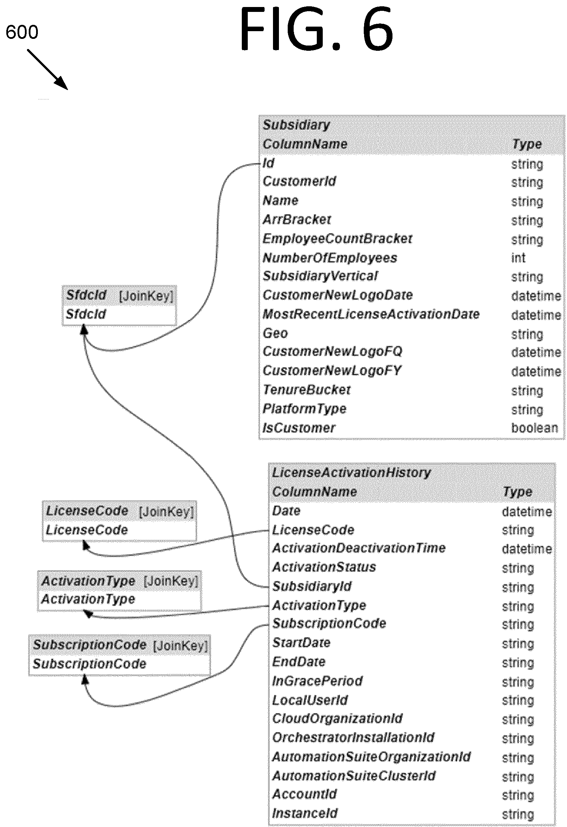

Referring back to step 212 of FIG. 2, in one embodiment, interactive visualization of joinable datasets is provided. Since the certified dataset is stored in a data warehouse and not an in a relational database (e.g., SQL database), there are no features such as primary key, nullability, or foreign key. In one embodiment, entity integrity, and referential integrity parameters are defined for the certified dataset and an interactive visualization of the joinability of the data sources is provided. Entity integrity may be established by specifying and enforcing primary keys and nullability. Referential integrity may be established by specifying and enforcing foreign keys. In one example, a user can join customer subsidiaries with a license history. FIG. 5 shows a user interface 500 of a user selecting subsidiaries 502 for joining and FIG. 6 shows a user interface 600 of the subsidiary and license history, in accordance with one or more embodiments. The interactive visualization will then show the foreign keys that are needed for the join. The user may select the foreign keys to merge join the customer subsidiaries.

In one embodiment, documentation may be generated for the certified datasets. The documentation may include description of the columns, example usage, latest testing results, overall status of the certified dataset, etc.

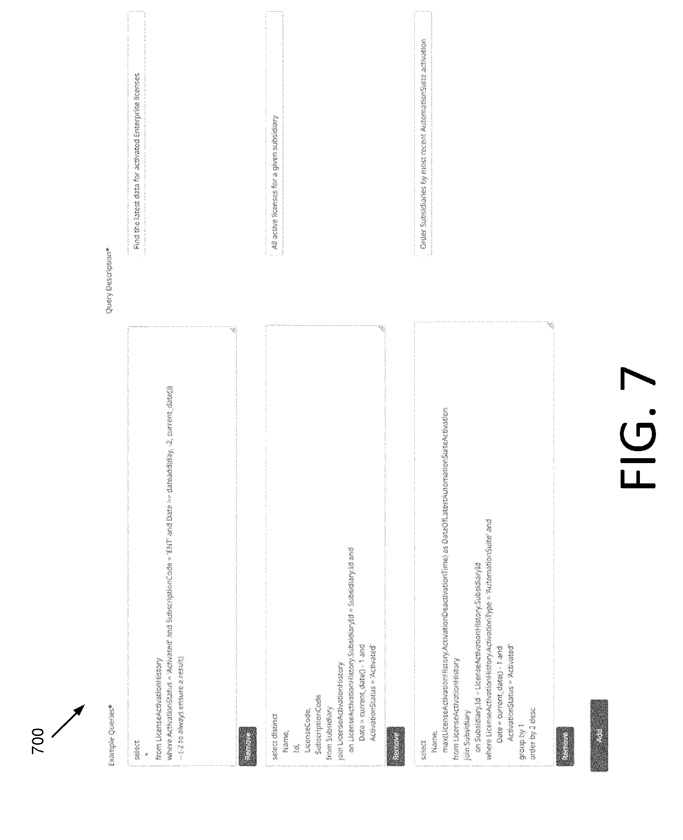

In one embodiment, exemplary queries from a user may be automatically validated. FIG. 7 shows a user interface 700 with example queries defined by a user, in accordance with one or more embodiments.

Referring back to FIG. 2, at step 214, metrics are determined based on the certified dataset. The metrics determined based on the certified dataset represents certified metrics. The metrics may be defined by a user interacting with a computing system (e.g., computing system 100 of FIG. 1). The metrics may be defined for a subsidiary ID associated with a customer.

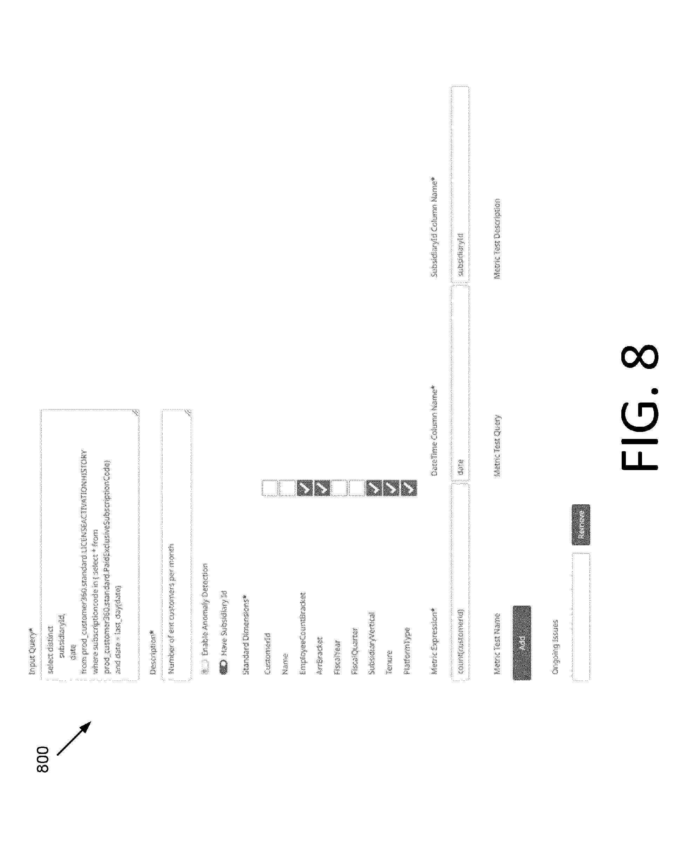

FIG. 8 shows an exemplary user interface 800 defining metrics, in accordance with one or more embodiments. User interface 800 may be the user interface by which a user interacts for defining the metrics determined at step 214 of FIG. 2.

Referring back to step 214 of FIG. 2, in one embodiment, the metrics may be defined with automated anomaly detection with subscribable alerts. In one embodiment, multiplication of metrics may be constrained by standard customer dimensions. In one embodiment, industry benchmarking for, e.g., time to value may be performed based on the metrics. In one embodiment, a value-based priority strategy may be determined based on the metrics. For example, one a user defines a metric, anomaly detection can be enabled based on the metric and the user may receive alerts when anomalies are detected. The metric may be defined to have a maximum value, minimum value, and median value. Alerts may be defined once metric values go out of that range defined by the maximum value, the minimum value, and/or the median value.

The steps and sub-steps disclosed herein, including the steps and sub-steps of FIG. 2, may be performed by a computer program, encoding instructions for the processor(s) to perform at least part of the process(es) described in FIG. 2, in accordance with embodiments of the present invention. The computer program may be embodied on a non-transitory computer-readable medium. The computer-readable medium may be, but is not limited to, a hard disk drive, a flash device, RAM, a tape, and/or any other such medium or combination of media used to store data. The computer program may include encoded instructions for controlling processor(s) of a computing system (e.g., processor(s) 110 of computing system 100 of FIG. 1) to implement all or part of the steps and sub-steps described in FIG. 2, which may also be stored on the computer-readable medium.

The computer program can be implemented in hardware, software, or a hybrid implementation. The computer program can be composed of modules that are in operative communication with one another, and which are designed to pass information or instructions to display. The computer program can be configured to operate on a general purpose computer, an ASIC, or any other suitable device.

It will be readily understood that the components of various embodiments of the present invention, as generally described and illustrated in the figures herein, may be arranged and designed in a wide variety of different configurations. Thus, the detailed description of the embodiments of the present invention, as represented in the attached figures, is not intended to limit the scope of the invention as claimed, but is merely representative of selected embodiments of the invention.

The features, structures, or characteristics of the invention described throughout this specification may be combined in any suitable manner in one or more embodiments. For example, reference throughout this specification to "certain embodiments," "some embodiments," or similar language means that a particular feature, structure, or characteristic described in connection with the embodiment is included in at least one embodiment of the present invention. Thus, appearances of the phrases "in certain embodiments," "in some embodiment," "in other embodiments," or similar language throughout this specification do not necessarily all refer to the same group of embodiments and the described features, structures, or characteristics may be combined in any suitable manner in one or more embodiments.

It should be noted that reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussion of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize that the invention can be practiced without one or more of the specific features or advantages of a particular embodiment. In other instances, additional features and advantages may be recognized in certain embodiments that may not be present in all embodiments of the invention.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention. In order to determine the metes and bounds of the invention, therefore, reference should be made to the appended claims.

## Claims

1. A computer-implemented method for automatic certification of data, the method comprising:
receiving 1) data that was transformed from initial data and 2) data specifications for the transformed data;
determining a similarity between the transformed data and the data specifications by calculating a statistical difference score between a distribution of values of the transformed data and a distribution of values of a source of truth data source;
determining whether the similarity is satisfactory; and
certifying the transformed data in response to determining that the similarity is satisfactory.

2. The computer-implemented method of claim 1, wherein the transformed data comprises telemetry data, the telemetry data comprising names, triggers, and properties of telemetry events.

3. The computer-implemented method of claim 1, wherein determining a similarity between the transformed data and the data specifications comprises:
verifying that values of the transformed data are constrained to a reference range based on a source of truth data source.

4. The computer-implemented method of claim 1, wherein determining a similarity between the transformed data and the data specifications comprises:
determining a semantic similarity between the transformed data and the data specifications.

5. The computer-implemented method of claim 1, wherein the data specifications are defined based on values of the transformed data.

6. The computer-implemented method of claim 1, further comprising:
merging the certified data with other certified data to generate a certified dataset.

7. The computer-implemented method of claim 6, further comprising:
determining metrics based on the certified dataset.

8. A system comprising:
a memory storing computer program instructions; and
at least one processor configured to execute the computer program instructions for automatic certification of data, the computer program instructions configured to cause the at least one processor to perform operations of:
receiving 1) data that was transformed from initial data and 2) data specifications for the transformed data;
determining a similarity between the transformed data and the data specifications by calculating a statistical difference score between a distribution of values of the transformed data and a distribution of values of a source of truth data source;
determining whether the similarity is satisfactory; and
certifying the transformed data in response to determining that the similarity is satisfactory.

9. The system of claim 8, wherein the transformed data comprises telemetry data, the telemetry data comprising names, triggers, and properties of telemetry events.

10. The system of claim 8, wherein determining a similarity between the transformed data and the data specifications comprises:
verifying that values of the transformed data are constrained to a reference range based on a source of truth data source.

11. The system of claim 8, wherein determining a similarity between the transformed data and the data specifications comprises:
determining a semantic similarity between the transformed data and the data specifications.

12. The system of claim 8, wherein the data specifications are defined based on values of the transformed data.

13. The system of claim 8, the operations further comprising:
merging the certified data with other certified data to generate a certified dataset.

14. The system of claim 13, the operations further comprising:
determining metrics based on the certified dataset.

15. A non-transitory computer-readable medium storing computer program instructions for automatic certification of data, the computer program instructions, when executed on at least one processor, cause the at least one processor to perform operations comprising:
receiving 1) data that was transformed from initial data and 2) data specifications for the transformed data;
determining a similarity between the transformed data and the data specifications by calculating a statistical difference score between a distribution of values of the transformed data and a distribution of values of a source of truth data source;
determining whether the similarity is satisfactory; and
certifying the transformed data in response to determining that the similarity is satisfactory.
